(19) Europäisches Patentamt / European Patent Office / Office européen des brevets

(11) **EP 3 896 942 A1**

(12) **EUROPEAN PATENT APPLICATION**

(43) Date of publication:
**20.10.2021 Bulletin 2021/42**

(51) Int Cl.:
**H04L 29/08** *(2006.01)*    **G05D 1/02** *(2020.01)*

(21) Application number: **20169777.8**

(22) Date of filing: **16.04.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Robert Bosch GmbH**
**70442 Stuttgart (DE)**

(72) Inventors:
- **Schwardmann, Jens**
  **31137 Hildesheim (DE)**
- **Llatser Marti, Ignacio**
  **31135 Hildesheim (DE)**
- **Zimmer, Christoph**
  **70825 Korntal (DE)**

(54) **ON-BOARD UNIT, METHOD FOR COOPERATIVE DRIVING, MODEL DETERMINATION UNIT, METHOD FOR DETERMINING A MACHINE-LEARNING COMMUNICATION MODEL, SYSTEM, METHOD, VEHICLE, AND USER EQUIPMENT**

(57)    An on-board unit (OBU1; OBU2) for cooperative driving of a road user is provided. The on-board unit (OBU1; OBU2) comprises: an environment determination unit (102; 112) being configured to determine traffic situation data (tsD) representing a traffic situation in which the road user participates; a communication scheme determination unit (104; 114) being configured to determine at least one communication parameter (cP) in dependence on the determined traffic situation data (tsD) using a machine-learning communication model (110; 120); and a coordination unit (106; 116) being configured to communicate in dependence on the at least one communication parameter (cP) with at least one further on-board unit (OBU2; OBU1) of another road user via at least one coordination message (cM) which is transmitted via a radio channel (RCH).

**FIG. 1**

**Description**

State of the art

The invention relates to an on-board unit, a method for cooperative driving, a model determination unit, a method for determining a machine-learning communication model, a system, a method, a vehicle, and a user equipment.

Many use cases for vehicle-to-X (V2X) communication benefit from cooperative maneuver coordination, which consists of nearby vehicles negotiating common joint maneuvers, which optimizes the vehicular traffic flow, driving comfort and efficiency of road utilization with respect to having each vehicle plan its own maneuver independently.

Typical use cases where maneuver coordination is expected to bring a large benefit are motorway merge-in ramps, intersections in urban areas or rural roads (especially for left turn maneuvers), traffic jam platoons and overtaking maneuvers.

Maneuver coordination is known for example from DE 10 2018 109 885 A1 or DE 10 2018 109 883 A1.

Disclosure of the invention

The problems of the prior art are resolved by an on-board unit according to claim 1, a method for cooperative driving according to a secondary claim, a model determination unit according to a further secondary claim, a method for determining a machine-learning communication model according to a further secondary claim, a system according to a further secondary claim, a method according to a further secondary claim, a vehicle according to a further secondary claim, and an user equipment according to a further secondary claim.

An aspect of the description is directed to an on-board unit for cooperative driving of a road user, wherein the on-board unit comprises: an environment determination unit being configured to determine traffic situation data representing a traffic situation in which the road user participates; a communication scheme determination unit being configured to determine at least one communication parameter in dependence on the determined traffic situation data using a machine-learning communication model; and a coordination unit being configured to communicate in dependence on the at least one communication parameter with at least one further on-board unit of another road user via at least one coordination message which is transmitted via a radio channel.

The on-board unit chooses the optimal communication parameters that determine how to transmit coordination messages. Furthermore, the optimal parametrization is depending on a plurality of different environment parameters like the vehicle dynamics, the driving environment and further conditions, which are represented by the traffic situation data. The machine-learning communication model considers these different environment parameters in order to influence the surrounding vehicles in order to arrive at an optimal outcome in the sense of a reduced radio usage and a successful solution of the traffic situation.

The approach therefore addresses the issue of an optimal parametrization of a maneuver coordination process between road users. With this approach, the communication parameters are optimized based on observations of the result of for example past cooperative maneuver coordination processes. Therefore, the on-board unit is able to quickly determine the optimal reaction to each traffic situation.

In summary, a solution to optimize a maneuver coordination process is provided to deal with the complex dependencies between the environmental parameters representing the traffic situation, communication parameters and the traffic situation outcome.

According to an advantageous example, the coordination unit is configured to determine the payload of at least one coordination message in dependence on the at least one communication parameter.

Advantageously the at least one coordination message is built by using the machine-learning communication model. Therefore, the used machine-learning communication model applies past good experiences with respect to a maneuver outcome in a comparable fashion to the present traffic situation. In particular, the size and structure of the coordination message are determined.

In particular, the payload of the at least one coordination message comprises a plurality of trajectories the on-board unit of the road user offers to other on-board units of other vehicles.

According to an advantageous example, the coordination unit is configured to transmit the at least one coordination message via the radio channel in dependence on the at least one communication parameter.

Advantageously the transmission of the at least one coordination message is governed by the machine-learning communication model. Therefore, the used machine-learning model applies past good experiences with respect to a maneuver outcome in a comparable fashion to the present traffic situation. In particular, the radio transmission parameters of the coordination message are determined.

According to an advantageous example, the coordination unit is configured to receive the at least one coordination message via the radio channel in dependence on the at least one communication parameter.

In this case, at least one Rx parameter is determined by the machine-learning communication model to configure the radio interface of the on-board unit in accordance with the present traffic situation. Advantageously, the Rx radio interface is therefore configured such that a radio channel listening is established adapted to the present traffic situation.

According to an advantageous example, the machine-learning model is a Gaussian process model, a Bayesian Neural Network, or a Bayesian non-linear regression model.

A further aspect of the description is directed to a method for cooperative driving of a road user, wherein the method comprises: determine traffic situation data representing a traffic situation in which the road user participates; determine at least one communication parameter in dependence on the determined traffic situation data using a machine-learning communication model; and communicate in dependence on the at least one communication parameter with at least one further on-board unit of another road user via at least one coordination message which is transmitted via a radio channel.

According to an advantageous example, the method is adapted to operate the described on-board unit.

A further aspect of the description is directed to a model determination unit for determining a machine-learning communication model for cooperative driving of a road user, wherein the model determination unit comprises: a coordination scoring unit being configured to determine a coordination score in dependence on a traffic situation outcome; and a training unit being configured to train the communication model with a plurality of training sets in dependence on the coordination score, wherein each training set comprises traffic situation data, at least one communication parameter and the traffic situation outcome.

After a maneuver involving a plurality of road users, the success of the maneuver execution can be judged by measuring a number of evaluation metrics, which are aggregated into the coordination score in relation with similar maneuvers in the past. In this way, it is determined how the selected at least one communication parameter needs to be adapted for future maneuvers. Advantageously, the maneuver score can be adapted to the preference of the OEM and/or can be based on a drive mode of the vehicle, for example, a comfort drive mode or a sport drive mode.

Therefore, machine learning is used to model the relation between the traffic situation, the communication parameter and the score. On the road, this allows to quickly determine the optimal reaction to each traffic situation, which maximizes the evaluation metrics for the given scenario.

According to an advantageous example, the model determination unit comprises: a training subset selector configured to select the training sets from a pool of training sets in dependence on a selection policy, wherein the selection policy is based on the coordination score (e.g. criteria such as the predictive variance of the machine learning model); and the training unit being configured to train the communication model with the selected training sets.

The selected seed training sets are expected to be the most informative for learning the communication model. The determined seed training subsets are appropriate for increasing the accuracy of the communication model. Working on the determined seed training subsets of training data reduces training time with less computation and without significantly compromising accuracy.

According to an advantageous example, the model determination unit comprises: an environment unit being configured to determine a reward in dependence on the coordination score and being configured to determine a state of the environment in dependence on an agent action, wherein the state comprises traffic situation data; and an agent unit being configured to determine the agent action in dependence on the reward and in dependence on the state, wherein the agent action comprises the at least one communication parameter.

So, the model determination unit applies reinforcement learning, wherein the agent interacts with the real or simulated environment in order to determine training sets with a favorable coordination score. The agent's actions can be trial-and-error actions or can be based on policies. If a well-defined simulation is used, the agent may interact freely with the environment in order to determine favorable training sets.

According to an advantageous example, a weight unit is configured to apply different weights to metrics of the traffic situation outcome.

Advantageously, the scheme of different weights for the metrics of the maneuver outcome can be adapted to the preference of the OEM or can be based on a drive mode of the vehicle, for example a comfort drive mode or a sport drive mode. This makes it possible to adapt the reaction of the road user according to a preferred driving mode of a vehicle.

According to an advantageous example, the model determination unit comprises a feature selector, which is configured to select a subset from a plurality of types of traffic situation data.

As a result, the machine-learning is done with the most relevant traffic situation data representing the environment. Advantageously, the subset selection of types of traffic situation data minimizes the input space and therefore reduces model and training complexity in terms of memory and processing time. On the other hand, the traffic situation data as a whole may comprise different types of data carrying the same information seen from the model training perspective.

According to an advantageous example, the model determination unit further comprises: a safety unit being configured to determine a safety indicator in dependence on the traffic situation data; and the training unit being configured to train the communication model, if the safety indicator indicates the requested traffic situation or driving situation as safe at least for the road user. In other words, safety critical is obtaining a coordination score for an unsafe traffic situation.

That's why requesting coordination scores is allowed only for safe traffic situations, which are indicated by the safety indicator.

Advantageously, the training is constrained to request only coordination scores, which do not impair driving safety. In other words, if potential training data leads to a negative impact on road safety of at least one road user, then no coordination scores are requested for this training data. Therefore, the safety indicator represents a constraint to the optimization problem and indicates safe operation for example for positive values.

According to an advantageous example, the safety unit is configured to determine the safety indicator in dependence on the traffic situation data using a further machine-learning model.

The further machine-learning model maps the traffic situation data to the safety indicator and is specifically trained to detect anomalies in the vehicle behavior. These anomalies are reflected in the safety indicator in order to determine and reject road user behavior compromising driving safety for learning the machine-learning communication model. In other words, the further machine-learning model is able to determine the safety indicator in the sense of a probabilistic safety constraint. So, safety critical behavior of vehicles is avoided by requesting coordination scores only for those potential training data that does not impair road safety.

According to an advantageous example, the machine-learning communication model and/or the further machine-learning model is a Gaussian process model, a Bayesian Neural Network, or a Bayesian non-linear regression model.

A further aspect of the description is directed to a method for determining a machine-learning communication model for cooperative driving of a road user, wherein the method comprises: determine a coordination score in dependence on a traffic situation outcome; and train the communication model with a plurality of training sets in dependence on the coordination score, wherein each training set comprises traffic situation data, at least one communication parameter and the traffic situation outcome.

According to an advantageous example, the method is adapted to operate the model determination unit.

A further aspect of the description is directed to a system comprising the on-board unit and the model determination unit.

A further aspect of the description is directed to a vehicle comprising the on-board unit and/or the model determination unit.

According to an advantageous example, the environment determination unit comprises at least one sensor being configured to provide a part of the traffic situation data, and wherein the vehicle comprises at least one actuator being configured to be controlled in dependence on a trajectory which has been agreed upon via the at least one coordination message between the on-board-unit and the at least one another on-board-unit of another vehicle.

A further aspect of the description is directed to a user equipment comprising the on-board unit and/or the determination unit.

In the figures

Figure 1    depicts two on-board units of road users;

Figure 2    depicts schematically a road situation;

Figure 3    depicts a sequence diagram;

Figure 4    depicts schematically a model determination unit;

Figure 5    depicts schematically an agent unit and an environment unit;

Figure 6    depicts schematically agent-based learning;

Figure 7    depicts schematically a neural network; and

Figure 8    depicts schematically a learning process for the neural network.

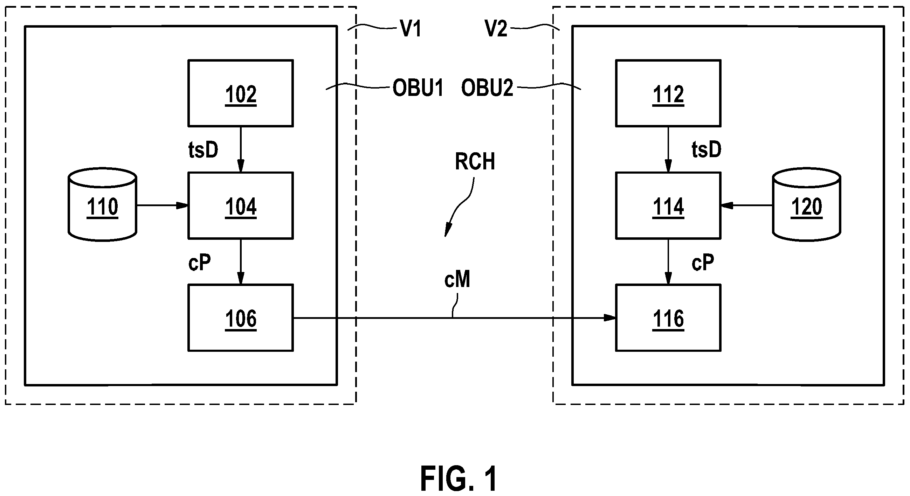

Figure 1 depicts two on-board units OBU1, OBU2 of road users. The on-board unit OBU1, OBU2 is configured to enable cooperative driving of the road user, for example vehicles or persons.

An environment determination unit 102, 112 is configured to determine traffic situation data tsD representing a traffic situation in which the road user participates. Parameters of the traffic situation data tsD are obtained by the vehicle V1, V2 participating in the maneuver coordination from its environmental model. For example, measurements of sensors or results from other on-board units of the same vehicle V1, V2 are used as part of the present traffic situation. Furthermore, information, which is received via radio, makes part of the traffic situation. So, the traffic situation data tsD comprises a plurality of present parameters representing the traffic situation in which the road user of the on-board unit OBU1, OBU2 takes part. The traffic situation data tsD comprise at least one of the following parameters:

- present V2X channel load before initiating the present maneuver coordination,
- present location of other vehicles,
- present inter-vehicle distances,
- present degree of driving automation of the involved vehicles,
- present vehicle dynamics, e.g. absolute and relative speed and acceleration,
- type of road or motorway,
- road topology, e.g. intersection, motorway entrance,
- number of lanes,
- V2X-equipped and non-equipped vehicle density,
- presence of vulnerable road users, e.g. cyclists, pedestrians,
- present weather conditions,
- planned maneuver type, e.g., merging, overtaking, intersection crossing, roundabout, emergency vehicle approaching.

A communication scheme determination unit 104, 114 is configured to determine at least one communication parameter cP in dependence on the determined traffic situation data tsD using a machine-learning communication model 110, 120.

A coordination unit 106, 116 is configured to communicate in dependence on the at least one communication parameter cP with at least one further on-board unit OBU2, OBU1 of another road user via at least one coordination message cM which is transmitted via a radio channel RCH.

The coordination unit 106, 116 is configured to determine the payload of at least one coordination message cM in dependence on the at least one communication parameter cP. For the payload determination of the at least one communication parameter cP comprises at least one of the following:

- a minimum size of the payload of the coordination message cM,
- a maximum size of the payload of the coordination message cM,
- a reference size of the payload of the coordination message cM,
- a minimum number of trajectories contained in the at least one coordination message cM,
- a maximum number of trajectories contained in the at least one coordination message cM,
- a reference number of trajectories contained in the at least one coordination message cM,
- a minimum trajectory length of trajectories contained in the at least one coordination message cM,
- a maximum trajectory length of trajectories contained in the at least one coordination message cM,
- a reference trajectory length of trajectories contained in the at least one coordination message cM,
- a minimum trajectory resolution of trajectories contained in the at least one coordination message cM,
- a maximum trajectory resolution of trajectories contained in the at least one coordination message cM,
- a reference trajectory resolution of trajectories contained in the at least one coordination message cM, and
- a sequence of trajectories in the coordination message cM.

The coordination unit 106, 116 is configured to transmit the at least one coordination message cM via the radio channel RCH in dependence on the at least one communication parameter cP. The at least one communication parameter cP is chosen individually by the on-board unit OBU1, OBU2.

For example, the communication parameter comprises a Tx parameter to configure the radio interface of the on-board unit OBU1, OBU2 at least for the coordination message cM. The determined communication parameter cP is for example handed over to the networking & transport layer.

The at least one communication parameter cP comprises at least one of the following:

- at least one reference radio channel RCH for the transmission of the coordination message cM,
- a minimum QoS value for the at least one coordination message cM,
- a maximum QoS value for the at least one coordination message cM,
- a reference QoS value for the at least one coordination message cM,
- a minimum transmission frequency of the at least one coordination message cM,
- a maximum transmission frequency of the at least one coordination message cM,
- a reference transmission frequency of the at least one coordination message cM,
- a planned transmission start time of the at least one coordination message cM,
- a minimum transmission power for the at least one coordination message cM,

- a maximum transmission power for the at least one coordination message cM,
- a reference transmission power for the at least one coordination message cM,
- a minimum number of active transmit queues,
- a maximum number of active transmit queues,
- a reference number of active transmit queues,
- a minimum data rate for the transmission of the at least one coordination message cM,
- a maximum data rate for the transmission of the at least one coordination message cM,
- a reference data rate for the transmission of the at least one coordination message cM,
- a minimum transmission priority for the at least one control message cM,
- a maximum transmission priority for the at least one control message cM,
- a reference transmission priority for the at least one control message cM,
- a minimum expiry time of the at least one coordination message cM,
- a maximum expiry time of the at least one coordination message cM,
- a reference expiry time of the at least one coordination message cM,
- a minimum number of repetitions for the at least one coordination message cM,
- a maximum number of repetitions for the at least one coordination message cM, and
- a reference number of repetitions for the at least one coordination message cM.

The coordination unit 116, 106 is configured to receive the at least one coordination message cM via the radio channel RCH in dependence on the at least one communication parameter cP. The at least one communication parameter cP comprises at least one of the following:

- a minimum QoS value for the at least one coordination message cM,
- a maximum QoS value for the at least one coordination message cM,
- a reference QoS value for the at least one coordination message cM,
- at least one reference radio channel RCH for the reception of the coordination message cM,
- a minimum receiver sensitivity for receiving the at least one further coordination message cM,
- a maximum receiver sensitivity for receiving the at least one further coordination message cM,
- a reference receiver sensitivity for receiving the at least one further coordination message cM, and
- a minimum Signal-To-Noise-Ratio.

Examples of the at least one communication parameter cP include the number of alternative and requested trajectories as well as how often they are transmitted by each cooperative vehicle.

The traffic situation outcome tsO is represented by a plurality of metrics. These metrics are used to judge the success of the maneuver. The metrics of the traffic situation outcome tsO include at least one of the following including partly a learning goal:

- total time to perform the maneuver,
- average vehicle speed after the maneuver: the larger, the better,
- delta value compared to the speed limit or the target speed set by the driver: the lower the better,
- maximum vehicle acceleration or braking during the maneuver: the lower, the better,
- vehicle energy consumption: the lower, the better,
- minimum inter-vehicle distance for each time instant during the maneuver between any two vehicles during the maneuver: the higher, the better.
- wear on brakes and/or tires: the lower, the better,
- number of vehicles whose cooperation needs were satisfied: the higher, the better,
- fairness, e.g. vehicles which are waiting for a longer time in an intersection are granted cooperation,
- average V2X channel load during maneuver coordination.

As a V2X maneuver coordination service being provided by each on-board unit OBU1, OBU2 needs to share the limited V2X channel capacity with other communication services, there is a trade-off between the number of transmitted trajectories, which results in the quality of the traffic situation outcome, and the channel load. This trade-off is represented by the machine-learning model 110, 120.

According to an example, the machine-learning model 110, 120 is an artificial neural network, especially a Bayesian neural network. The communication scheme determination unit 104, 114 is configured to propagate the traffic situation data tsD through the trained neural network, wherein the input data is provided as an input parameter in an input section of the trained neural network, and wherein in an output section of the trained neural network at least one the at least one communication parameter cP is provided. For example, in the output section of the trained neural network at least one confidence value for the at least one communication parameter is provided, and wherein the coordination unit 106 is configured to communicate in dependence on the determined at least one communication parameter cP only, if the at least one confidence value lies within a pre-defined confidence interval. Advantageously, the confidence value indicates situations, for which the neural network is trained, that means has sufficient confidence in the output value.

In a further example, the machine-learning model 110, 120 is a Gaussian process model, or a Bayesian non-linear regression model. Gaussian processes are described in C. E. Rasmussen & C. K. I. Williams, Gaussian Processes for Machine Learning, the MIT Press, 2006, ISBN 026218253X. Bayesian Neural Networks are described in Yarin Gal, Uncertainty in Deep Learning, PhD thesis, University of Cambridge, 2016.

The result of the maneuver coordination process comprises the traffic situation data tsD, the at least one communication parameter cP and the traffic situation outcome tsO. The result is sent by the on-board unit OBU1, OBU2 to a central location and stored there.

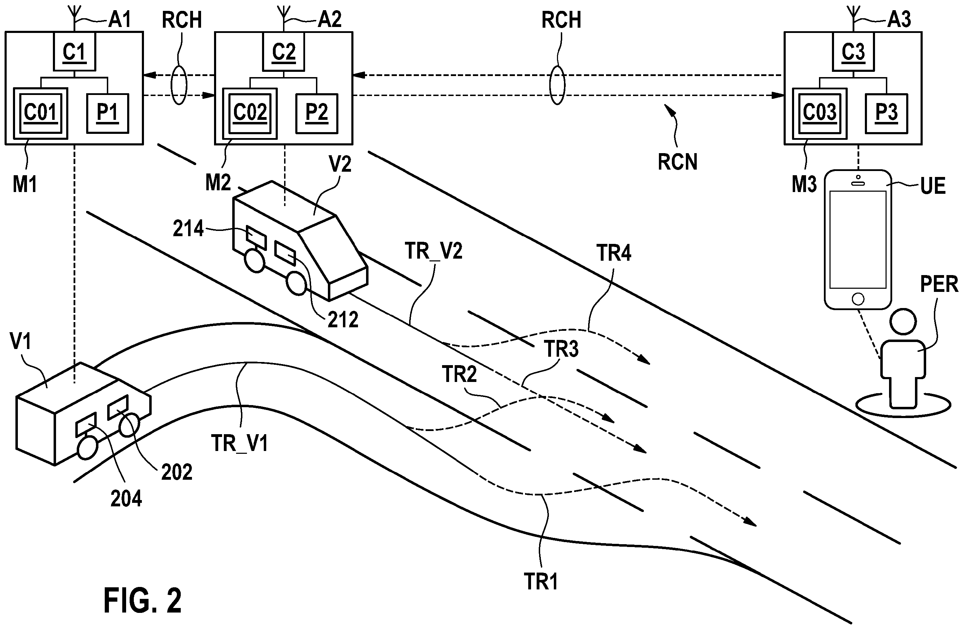

Figure 2 depicts schematically a road situation. The road users in form of motor vehicles V1 and V2 have to coordinate their future trajectories as the vehicle V1 is entering the two-lane road shown. Of course, also non-motorized vehicles can be equipped with an on-board unit as described herein. A road user in form of a person PER is walking beside the road and is carrying a user equipment UE.

The on-board units OBU1, OBU2, and OBU3 are part of or establish a radio communications network RCN. Scheduled or distributed communication between the on-board-units OBU1, OBU2, and OBU3 is possible. Each one of on-board units OBU1, OBU2, and OBU3 comprises a data bus interconnecting at least a processor P1, P2, P3, a memory M1, M2, M3, and a radio communication module C1, C2, C3. The radio communication module C1, C2, C3 is configured for the transmission and reception of radio signals according to the radio communications network RCN. The network nodes on-board units OBU1, OBU2, and OBU3 are road-side network nodes, which means that these network nodes are installed in the vehicle V1 or V2, a road infrastructure or the user equipment UE. On each of the memory M1, M2, M3 a computer program CO1, CO2, CO3 is stored, which implements the methods disclosed in this description when executed on the corresponding processor P1, P2, P3. Alternatively, or additionally, the processors P1, P2, P3 are implemented as ASIC.

Each one of the radio communication modules C1, C2, C3 is connected to an antenna A1, A2, A3.

For example, the radio communications network RCN provides the radio channel RCH as an adhoc radio channel. The corresponding radio channel RCH is an adhoc radio channel and represents an instance of wireless medium, use for the purpose of passing physical layer, PHY, protocol data units, PDUs, between two or more on-board-units OBU1, OBU2, and OBU3.

Each one of on-board-units OBU1, OBU2, and OBU3 is configured, for example, according to the IEEE 802.11p standard, especially IEEE 802.11p-2010 dated July 15, 2010, which is incorporated by reference. The IEEE 802.11p PHY and MAC provide services for upper layer protocols for Dedicated Short-Range Communications, DSRC, in the US and for Cooperative ITS, C-ITS, in Europe. The on-board-units OBU1, OBU2, and OBU3 communicate directly with each other via the adhoc radio channel in the unlicensed frequency range. The adhoc radio channel is arbitrated via a CSMA / CA (Carrier Sense Multiple Access / Collision Avoidance) protocol by each one of the radio communication modules C1, C2, and C3.

The document "ETSI EN 302 663 V1.2.0 (2012-11)", which is incorporated herein by reference, describes both lowermost layers of ITS-G5 technology (ITS G5: Intelligent Transport Systems operating in the 5 GHz frequency band), the physical layer and the data link layer. The radio communication modules C1, C2, and C3 realize, for example, these two lowest layers and corresponding functions according to "ETSI TS 102 687 V1.1.1 (2011-07)" in order to use the adhoc radio channel. The following unlicensed frequency bands are available in Europe for the use of the adhoc radio channel, which are part of the unlicensed frequency band NLFB: 1) ITS-G5A for safety-relevant applications in the frequency range 5.875 GHz to 5.905 GHz; 2) ITS-G5B for non-safety related applications in the frequency range 5,855 GHz to 5,875 GHz; and 3) ITS-G5D for the operation of ITS applications in the 5.055 GHz to 5.925 GHz frequency range. ITS-G5 allows communication between the on-board units OBU1, OBU2, and OBU3 out of the context of a base station. The ITS-G5 enables the immediate exchange of data frames and avoids the management overhead that is used when setting up a network.

The document "ETSI TS 102 687 V1.1.1 (2011-07)", which is incorporated herein by reference, describes for ITS-G5 a "Decentralized Congestion Control Mechanism". Among other things, the adhoc radio channel AHCH serves to exchange traffic safety and traffic efficiency data. The radio communication modules C1, C2, and C3 realize, for example, the functions as described in the document "ETSI TS 102 687 V1.1.1 (2011-07)". The applications and services in the ITS-G5 are based on the cooperative behavior of the roadside network nodes that make up the vehicular ad hoc network in the sense of the radio communications network RCN. The adhoc network enables time-critical road traffic applications that require rapid information exchange to alert and assist the driver and / or vehicle in good time. To ensure proper functioning of the adhoc network, "Decentralized Congestion Control Mechanisms" (DCC) is used for the adhoc radio channel of ITS-G5. DCC has features that reside on multiple layers of the ITS architecture. The DCC mechanisms are based on knowledge about the channel. The channel state information is obtained by channel probing. Channel state information can be obtained by the methods TPC (transmit power control), TRC (transmit rate control) and TDC (transmit data rate control). The methods determine the channel state information in response to received signal level thresholds or preamble information from detected packets. Of course, V2X communication can also be implemented using other technologies like LTE-V2X mode 3/4 or 5G NR.

The motor vehicle V1; V2 comprises the on-board unit OBU1, OBU2. In a further example, the motor vehicle also comprises a model determination unit for determining or updating the machine-learning model.

According to a further example, the motor vehicle V1, V2 comprises at least one sensor 202, 212. The sensor 202, 212 is configured to provide at least a part of the traffic situation data tsD to the environment determination unit 102, 112 of figure 1, for example measurements of the surrounding of the vehicle. The vehicle V1, V2 comprises at least one actuator 204; 214 being configured to be controlled in dependence on a trajectory which has been agreed upon via the at least one coordination message between the on-board-unit OBU1; OBU2 and the at least one another on-board-unit OBU2; OBU1 of another vehicle V2; V1.

The user equipment UE comprises an on-board unit OBU3 configured like the on-board unit OBU1; OBU2 and/or the determination unit. The pedestrian with the user equipment UE does not participate in the maneuver coordination in figure 2. The pedestrian is depicted to illustrate that the participants in a cooperative driving function need not to be cars, but can be any road user.

The on-board unit OBU1, OBU2 determine a presently planned reference trajectory TR_V1, TR_V2. Departing from the presently planned reference trajectory, the on-board unit OBU1, OBU2 determines alternative trajectories TR1 and TR2, TR3 and TR4.

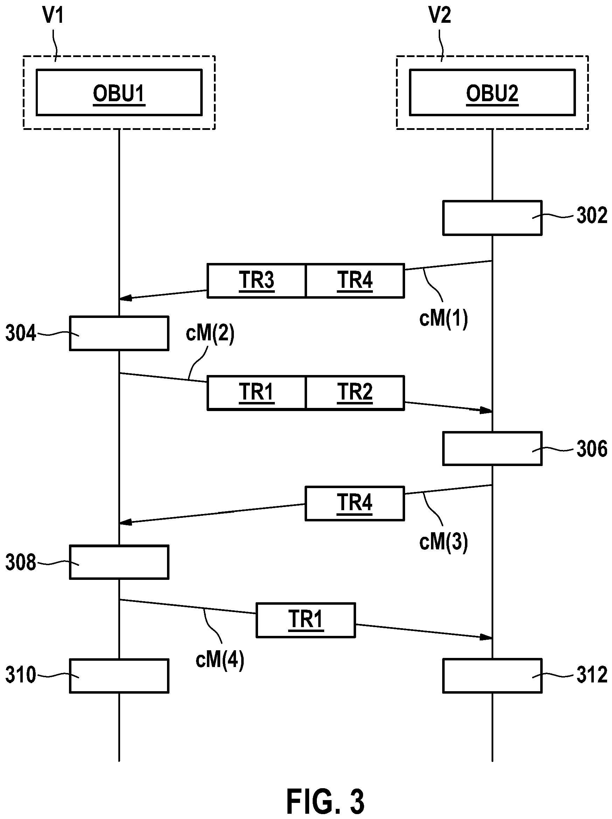

Figure 3 depicts a sequence diagram of an exemplary maneuver coordination process via an exemplarily shown coordination protocol. Reference is made to the use case lane merge depicted in figure 2.

The on-board unit OBU2 determines in a step 302 that the vehicle V1 will probably enter the lane, the motor vehicle V2 is presently driving. Whenever the on-board unit OBU2, OBU1 identifies a situation where maneuver coordination may be useful, it activates its maneuver coordination protocol. So, in the step 302 the on-board unit OBU2 determines a need for coordination between the two on-board units OBU1 and OBU2 of the motor vehicles V1, V2. The on-board unit OBU2 calculates alternative trajectories TR3, TR4 for vehicle V2. A request for coordination is sent via a first coordination message cM(1) to the on-board unit OBU1, wherein the first coordination message cM(1) comprises the alternative trajectories TR3, TR3 and their costs. An example for the at least one communication parameter cP is that the on-board unit OBU2 being part of the vehicle which probably needs to leave the lane it is driving initiates the coordination process.

According to a step 304, the on-board unit OBU1 determines two alternative trajectories TR1 and TR2, which are transmitted via a second coordination message cM (2) towards the on-board unit OBU2. Moreover, the present trajectory TR_V1 can be transmitted via the second coordination message cM (2). Furthermore, a cost for each alternative trajectory TR1, TR2 is determined and transmitted. For example, in case of the coordination message cM (2) the at least one communication parameter cP comprises properties of the determined trajectories TR1, TR2 like length and resolution, and a transmission frequency of the coordination message cM (2).

According to a step 306, the on-board unit OBU2 determines a response to the received trajectories TR1, TR2. A third coordination message cM (3) comprises the trajectorie TR4 as a new reference trajectory for the motor vehicle V2. Moreover, the coordination message cM (3) may further comprise a cost for the reference trajectory TR4. For example, in case of the coordination message cM (3) the at least one communication parameter cP comprises properties of the determined trajectory TR4 like length and resolution, and a transmission frequency of the coordination message cM (3).

In a step 308, the on-board unit OBU1 selects the trajectory TR1 as the new trajectory for the motor vehicle V1. A fourth coordination message cM (4) carries the decision of selecting the trajectory TR1 to the second on-board unit OBU2. In this case, the communication parameter cP may comprise a frequency of transmission of the fourth coordination message cM (4).

In a step 310, 312 the on-board unit OBU1, OBU2 determines actuator signals in order to control the actuators like the steering system, the motor, and the brakes of the vehicle V1, V2 in order to drive along the trajectories TR1, TR4.

The determination of the at least one communication parameter can be done at the beginning of the coordination, for example, in step 302 and a corresponding step not shown for the first on-board unit OBU1. The communication parameter cP determined at the beginning of the coordination can be fixed or variable during the maneuver coordination process.

In another example, the at least one communication parameter is determined a plurality of times during the coordination process. Also in this case, the communication parameter cP determined can be fixed or variable until the next determination of the communication parameter.

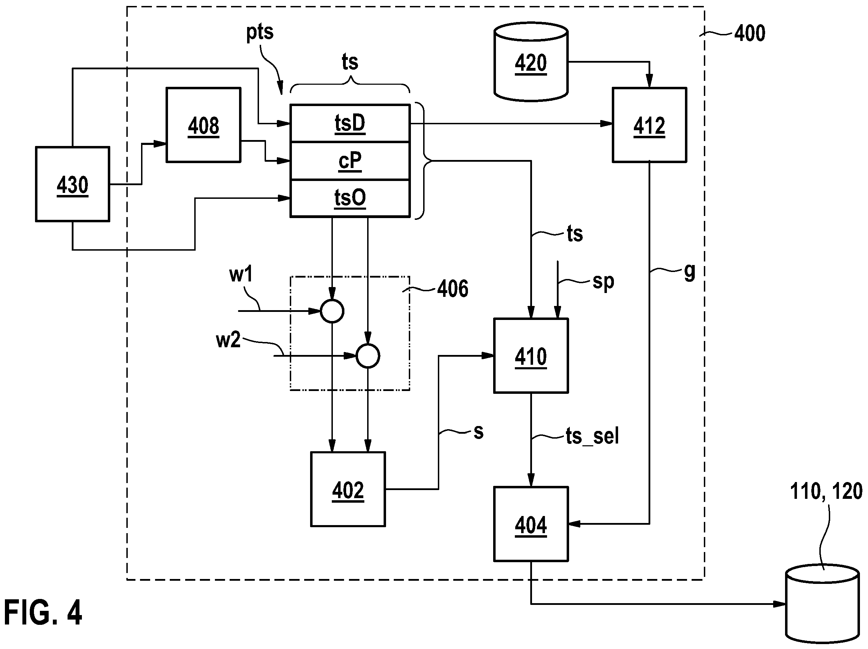

Figure 4 depicts schematically the model determination unit 400 for determining a machine-learning communication model 110, 120 according to figure 1 for cooperative driving of one of the road users depicted in figure 2.

Each present traffic situation is characterized by the traffic situation data $tsD = x_1, ...,x_m$. Each reaction of the on-board unit OBU1, OBU2 is characterized by the at least one communication parameter $cP = x_{m+1}, ..., x_n$ $(n > m)$. The resulting score s of a coordination process $x = (x_1, ..., x_n)$ is denoted by evaluation metrics $y_1, ..., y_p$ of the traffic situation outcome tsO.

For the first few traffic situations (either in simulations, test drives or in the field), the reactions in form of the at least one communication parameter cP is chosen randomly or heuristically to observe (x,y) tuples. Based on these initial observations, the model 110, 120 is trained to describe the mapping from x to y, which is denoted by $f(x) = y$.

To build the machine-learning communication model 110, 120, a plurality of training sets ts are used. A training set ts comprises:

- the observed environmental parameters in form of the traffic situation data tsD,
- dynamic parameters in form of the at least one communication parameter cP, and
- evaluation metrics from the maneuver coordination processes in form of the traffic situation outcome tsO.

The traffic situation outcome is obtained e.g. from simulations, test drives or - after the system is deployed - from actual coordination processes. The training sets ts are collected at a central location represented by an aggregator unit 430.

The model determination unit 400 comprises at least: A coordination scoring unit 402, which is configured to determine a coordination score s in dependence on a traffic situation outcome tsO; and a training unit 404, which is configured to train the communication model 110, 120 of figure 1 with a plurality of training sets ts in dependence on the coordination score s, wherein each training set ts comprises traffic situation data tsD, at least one communication parameter cP and the traffic situation outcome tsO.

A training subset selector 410 is configured to select the training sets ts from a pool of training sets pts in dependence on a selection policy sp, wherein the selection policy sp is based on the coordination score s. Therefore, the training unit 404 is configured to train the communication model 110, 120 with the selected training sets ts_sel.

The selection policy sp comprises for example to select as the seed training sets from the pool of training sets pts only top-ranked training sets, for example training sets

- training sets ts with a high uncertainty, which means that the coordination score s is in the middle between the expected maximum and the expected minimum for the coordination scores, or
- a mixture, for example 90 % top-ranked training sets and 10 % random training sets, or
- 40 % top-ranked training sets, 40 % high uncertainty training sets, and 20 % randomly picked training sets.

A weight unit 406 is configured to apply different weights w1, w2 to metrics of the traffic situation outcome tsO. The different weights w1, w2 are determined a priori in order to maximize or emphasize a learning goal. This is achieved by reducing or increasing the impact of the metrics by adjusting the weights w1, w2. The score s can be determined by combining the evaluation metrics $y_1, ..., y_p$, for example, by a weighted sum $s = \sum y_i \cdot w_i$, a weighted product $s = \Pi y_i^{w_i}$, or a combination of these, where $w_i$ represent weights which are adjusted by the weight unit 406 to ensure that the metric values are comparable according to the importance of each metric.

A feature selector 408 is configured to select a subset from a plurality of types of traffic situation data tsD. According to an example of the feature selector, active learning is applied to choose the reactions $cP = x_{m+1}, ..., x_n$, which are most informative for learning the mapping $f(x) = y$.

A safety unit 412 is configured to determine a safety indicator g in dependence on the traffic situation data tsD. The training unit 400 is configured to request coordination scores for training the communication model 110, 120, if the safety indicator g indicates a safe traffic situation at least for the road user. The safety unit 412 is configured to determine the safety indicator g in dependence on the traffic situation data tsD using a further machine-learning model 420. The machine-learning communication model 420 can be trained together with the communication model 110, 120.

In case some choices of the at least one communication parameter cP might lead to safety critical behavior of the road users, for example when unusable or very few trajectories are transmitted. So, adding a constraint to the optimization problem modifies it to

$$(x_{m+1}^*, ..., x_n^*) = argmax_{(x_{m+1}, ..., x_n)} \sigma^f(x_1, ..., x_n) \text{ such that } g(x_1, ..., x_n) > 0$$

where $g$ is the safety indicator indicating safe operation for positive values. Therefore, the safety unit 412 provides the safety indicator g and decides, whether training data is recorded for an x under consideration. Only if it is safe, it may be recorded and, on it is recorded, it can always be used.

If this safety indicator g is not known and not derivable, but some feedback about it from the system is present, the safety unit 412 is configured differently. For example, aside of the score s a further score z for safety is determined.

The model 420 is determined to obtain probabilistic safety constraints. This would lead to a constrained optimization problem

$$(x_{m+1}^*, \dots, x_n^*) = argmax_{(x_{m+1}, \dots, x_n)} \sigma^f(x_1, \dots, x_n)$$

$$such\ that\ P(g(x_1, \dots, x_n) > 0) > 1 - \alpha$$

where $\alpha$ is the allowance for risk.

The machine-learning communication model 110, 120 and/or the further machine-learning model 420 is a Gaussian process model, a Bayesian Neural Network, or a Bayesian non-linear regression model.

Gaussian processes are suitable for problems for which no special model function is known. Its property as a machine learning method enables automatic modelling on the basis of observations. A Gaussian process captures the typical behavior of the system, which can be used to derive the optimal interpolation for the problem. The result is a probability distribution of possible interpolation functions and the solution with the highest probability.

The gaussian process

$$f \sim GP[m(x), k(x, x')]$$

is the probability distribution over functions $f : X \to \mathbb{R}$, which satisfies for all $x_1, \dots, x_n$ that means for all environmental parameters and communication parameters:

$$\begin{pmatrix} f(x_1) \\ \vdots \\ f(x_n) \end{pmatrix} \sim N \left[ \begin{pmatrix} m(x_1) \\ \vdots \\ m(x_n) \end{pmatrix}, \begin{pmatrix} k(x_1, x_1) & \cdots & k(x_1, x_n) \\ \vdots & \ddots & \vdots \\ k(x_n, x_1) & \cdots & k(x_n, x_n) \end{pmatrix} \right]$$

with the Gaussian distribution N, the mean m of Gaussian and the kernel k which is used to construct the covariance.

According to the gaussian process example, the traffic situation data tsD and the at least one communication parameter cP are both input parameters of the model 110, 120, whereas the traffic situation outcome tsO is its output parameter. This model 110, 120 maps from the input parameters to the output parameters. The model 110, 120 is used to solve a mixed linear integer problem in order to calculate the optimal at least one communication parameter cP. This problem describes the maximization of the success of the maneuver, measured with the traffic situation outcome tsO, by choosing optimal communication parameters cP for the current maneuver. The outcome of this step are optimal values for the at least one communication parameter cP, which are then used for the coordination of the maneuver.

In Gaussian Processes the information measured in entropy relates to predictive variance so the reactions are determined according to

$$(x_{m+1}^*, \dots, x_n^*) = argmax_{(x_{m+1}, \dots, x_n)} \sigma^f(x_1, \dots, x_n)$$

where $\sigma(x_1, \dots, x_n)^f$ is the predictive uncertainty of the Gaussian process.

The determined communication model 110, 120 is then transferred to the individual on-board units of motor vehicles or user equipments. Then the on-board units are capable to optimize maneuver coordination by determining the optimized at least one communication cP.

So, while the function f is learning on a central server by the model determination unit 400 with data from lots of vehicles, it is then deployed to each on-board unit of the vehicle or of the user equipment. Now, each vehicle that encounters a traffic situation with traffic situation data $tsD = x_1, \dots, x_m$ optimizes its reaction by solving

$$argmax_{(x_{m+1}, \dots, x_n)} f(x_1, \dots, x_n)$$

When using Active Learning to collect data for model training, the data with the hightes predictive variance is chosen. Once a model has been trained, the optimization problem is a different one, namely optimizing the score s over the communication parameters cP.

If the street situation changes (due to construction sites or so), one could always only use $\beta$ percent of the data (x,y) tuples to learn the model for f. The model f would then be regularly updated by the model determination unit 400 and deployed to the vehicles.

The model f allows us to determine traffic situations represented by the traffic situation data $tsD = x_1,..., x_m$ leading to bad scores s. These could be further analyzed (manually) in order to find solutions.

The data collection could also be built on Bayesian optimization instead of Active Learning. Difference: instead of learning the function f on the whole input space, one would only try to find the optimal point in the sense of an optimal set of communication parameters cP. This requires less data than Active Learning.

Instead of transferring the determined function, f to the vehicle and optimizing there, the optimization could be performed by the model determination unit 400 for selected traffic situation data tsD. Then only a fixed look-up table needs to be transferred to the on-board unit.

The aggregation unit 430 where the parameters of observed maneuvers are collected and/or the model determination unit 400 can for example be a server located in the cloud or in an on-board unit.

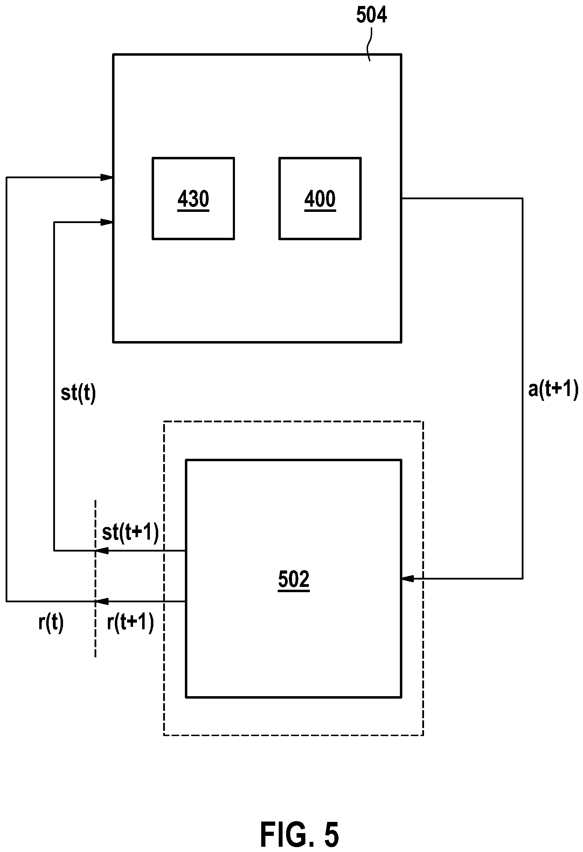

Figure 5 depicts schematically an agent unit 504 and an environment unit 502. The environment unit 502 is configured to determine a reward r in dependence on the coordination score s and is configured to determine a state st of the environment in dependence on an agent action a, wherein the state st comprises traffic situation data tsD. The agent unit 504 is configured to determine the agent action a in dependence on the reward r and in dependence on the state st, wherein the agent action a comprises the at least one communication parameter cP.

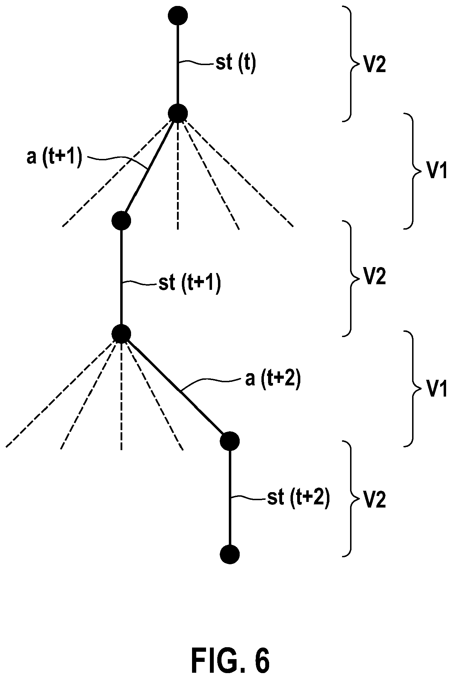

Figure 6 depicts schematically agent-based learning. The environment unit 502 determines the action of a vehicle V2, which is reflected in the present state st (t). The agent unit 504 has to determine the action a (t+1) comprising the communication parameter cP in response to the state st (t). The environment unit 502 determines the next state st (t+1) in dependence on the action a (t+1). The dashed lines indicate that the vehicle V1 can act differently, but has chosen the action a (t+1), a (t+2) as a proper reaction to its environment.

The agent unit 504 gets a reward r on the actions a it applies to the environment unit 502. In dependence on the reward r the aggregator unit 430 of the agent unit 504 aggregates the positively rewarded actions a including the at least one communication parameter cP and trains the communication model with the model determination unit 400.

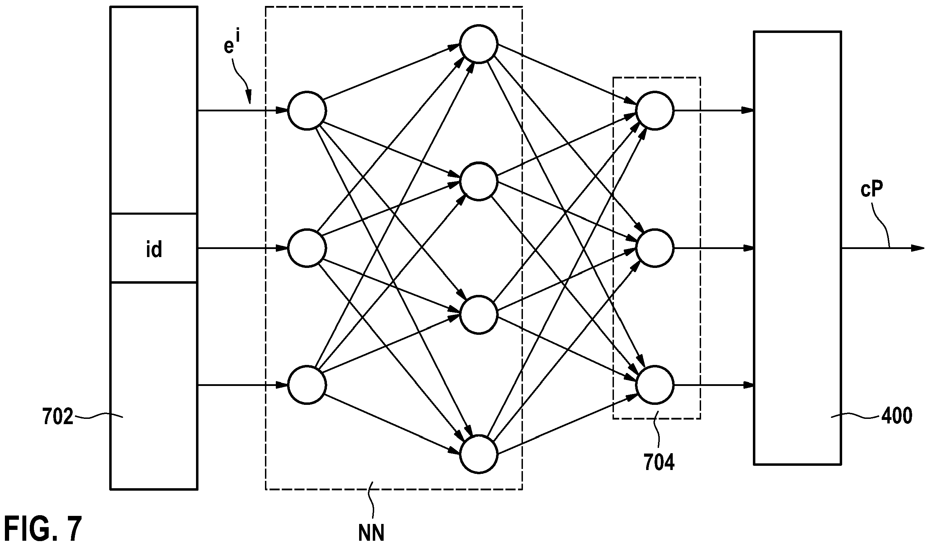

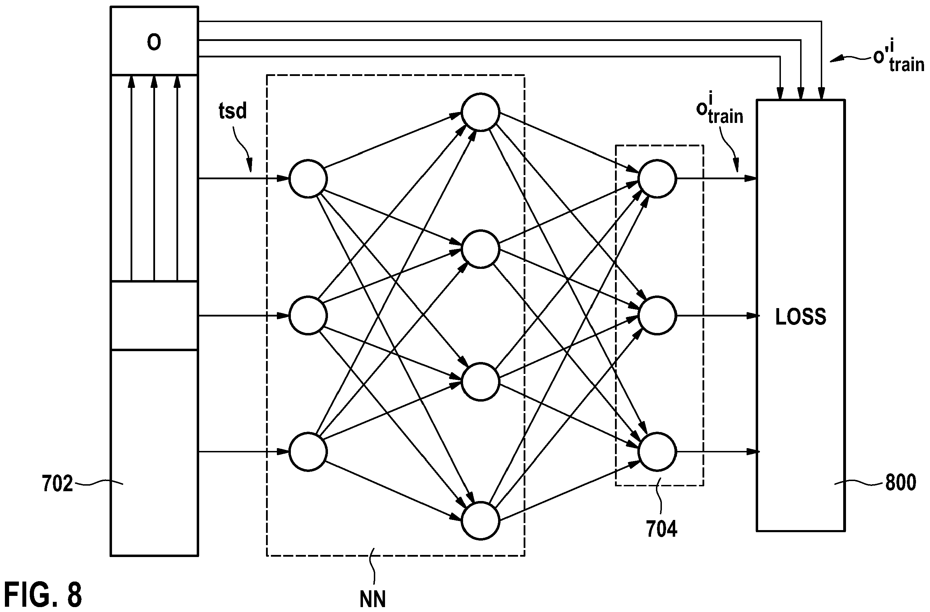

Figure 7 depicts a schematic arrangement for determining the tensor $y'^i$ representing the at least one communication parameter cP via the neural network NN representing the communication model 110, 120 of the previous figures based on the traffic situation data tsD represented by the tensor e'. The neural network NN therefore maps traffic situation data tsD to the at least one communication parameter cP. An arrangement for the training via the training unit 404 of figure 4 is shown in Figure 8. First, the training is referred to.

The traffic situation data tsD of a training set ts is provided in the form of input data id by an input interface 702. The arrangement comprises the artificial neural network NN with an input layer. For a time step i, an input tensor of the input data id is passed to the input layer. The input layer is part of the input section. For input data id, the output O is determined in the form of a prediction or is known beforehand. In time step i a tensor with observed values $o^i_{train}$ is determined from the output O, which are assigned to the observed values of the tensor $e^i_{train}$. The output O comprises the at least one communication parameter cP. Each of the time series of input data id is assigned to one of three input nodes. In a forward path of the artificial neural network NN, the input layer is followed by at least one hidden layer. In the example, a number of nodes of the at least one hidden layer is greater than a number of the input nodes. This number is to be regarded as a hyper parameter. In the example, four nodes are provided in the hidden layer. The neural network NN, for example, is learned by the gradient descent method in the form of backpropagation. The training of the neural network NN is therefore supervised.

In the forward path in the example, an output layer 704 is provided after at least one hidden layer. Prediction values are output at output layer 704 of the output section of the neural network NN. In the example, an output node is assigned to each prediction value.

In each time step i a tensor $o'^i_{train}$ is determined in which the prediction values for this time step i are contained. In the example, this is fed to a training function 800 together with the column vector of the observed values $o^i_{train}$ of the at least one communication parameter cP. The training function 800 is designed in the example to determine a prediction error by means of a loss function LOSS, in particular by means of a mean square error, and to train the model with it and by means of an optimizer, for example an Adam optimizer. The loss function LOSS is determined in the example depending on a deviation, in particular the Mean Square Error, from the values of the tensor of the observed values oitrain and the tensor of the prediction values $o'^i_{train}$.

The training is ended as soon as a fixed criterion is reached. In the example, the training is aborted if the loss does not decrease over several time steps, i.e. the Mean Square Error in particular does not decrease.

Test data is then entered into the model trained in this way. The model is generated by the training with the training data td. The model is evaluated with the test data in order to determine a test error, in particular with regard to the mean value $\mu$ and covariance $\Sigma$, to see how well a model performs.

According to the arrangement shown in Figure 7, the trained machine-learning model in the form of the neural network NN is used to provide a prediction for the at least one communication parameter cP. The same data preprocessing steps are performed as for the training data. For example, scaling and a determination of input and output data takes place. This determination takes place in the example during the operation of the on-board unit OBU1, OBU2, OBU3 of figures 1 or 2, i.e. during the operation of a motor vehicle or a user equipment.

The input data id that are entered into the trained artificial neural network NN. Depending on this, prediction values are determined. A determination score is determined depending on this.

As described for the training, a column vector e' is passed to the input layer for the input data id. The column vector is then passed to the input layer. Afterwards, in contrast to training, a determination device 400 determines the communication parameter cP depending on the prediction values $y'i$.

In particular, instructions of a computer program implementing the described Convolutional Neural Network NN are provided for the implementation of the described procedures. Dedicated hardware can also be provided, in which a trained model is mapped.

**Claims**

1. An on-board unit (OBU1; OBU2) for cooperative driving of a road user, wherein the on-board unit (OBU1; OBU2) comprises:

   an environment determination unit (102; 112) being configured to determine traffic situation data (tsD) representing a traffic situation in which the road user participates;
   a communication scheme determination unit (104; 114) being configured to determine at least one communication parameter (cP) in dependence on the determined traffic situation data (tsD) using a machine-learning communication model (110; 120); and
   a coordination unit (106; 116) being configured to communicate in dependence on the at least one communication parameter (cP) with at least one further on-board unit (OBU2; OBU1) of another road user via at least one coordination message (cM) which is transmitted via a radio channel (RCH).

2. The on-board unit (OBU1; OBU2) according to claim 1, wherein the coordination unit (106; 116) is configured to determine the payload of at least one coordination message (cM) in dependence on the at least one communication parameter (cP).

3. The on-board unit (OBU1; OBU2) according to one of the preceding claims, wherein the coordination unit (106; 116) is configured to transmit the at least one coordination message (cM) via the radio channel (RCH) in dependence on the at least one communication parameter (cP).

4. The on-board unit (OBU2; OBU1) according to one of the preceding claims, wherein the coordination unit (116; 106) is configured to receive the at least one coordination message (cM) via the radio channel (RCH) in dependence on the at least one communication parameter (cP).

5. The on-board unit (OBU1; OBU2) according to one of the preceding claims, wherein the machine-learning model (110; 120) is a Gaussian process model, a Bayesian Neural Network, or a Bayesian non-linear regression model.

6. A method for cooperative driving of a road user, wherein the method comprises:

   determine traffic situation data (tsD) representing a traffic situation in which the road user participates;
   determine at least one communication parameter (cP) in dependence on the determined traffic situation data (tsD) using a machine-learning communication model (110; 120); and
   communicate in dependence on the at least one communication parameter (cP) with at least one further on-board unit (OBU2; OBU1) of another road user via at least one coordination message (cM) which is transmitted via a radio channel (RCH).

7. The method according to claim 6, wherein the method is adapted to operate an on-board unit (OBU1; OBU2) according to claims 2 to 5.

8. A model determination unit (400) for determining a machine-learning communication model (110; 120) for cooperative driving of a road user, wherein the model determination unit (400) comprises:

   a coordination scoring unit (402) being configured to determine a coordination score (s) in dependence on a traffic situation outcome (tsO); and
a training unit (404) being configured to train the communication model (110; 120) with a plurality of training sets (ts) in dependence on the coordination score (s), wherein each training set (ts) comprises traffic situation data (tsD), at least one communication parameter (cP) and the traffic situation outcome (tsO).

9. The model determination unit (400) according to claim 8, wherein the model determination unit (400) comprises:

a training subset selector (410) configured to select the training sets (ts) from a pool of training sets (pts) in dependence on a selection policy (sp), wherein the selection policy (sp) is based on the coordination score (s); and the training unit (404) being configured to train the communication model (110; 120) with the selected training sets (ts_sel).

10. The model determination unit (400) according to claim 8 or 9, wherein the model determination unit (400) comprises:

an environment unit (502) being configured to determine a reward (r) in dependence on the coordination score (s) and being configured to determine a state (st) of the environment in dependence on an agent action (a), wherein the state (st) comprises traffic situation data (tsD); and
an agent unit (504) being configured to determine the agent action (a) in dependence on the reward (r) and in dependence on the state (st), wherein the agent action (a) comprises the at least one communication parameter (cP).

11. The model determination unit (400) according to one of the claims 8 to 10, wherein a weight unit (406) is configured to apply different weights (w) to metrics of the traffic situation outcome (tsO).

12. The model determination unit (400) according to one of the claims 8 to 11, wherein the model determination unit (400) comprises
a feature selector (408) which is configured to select a subset from a plurality of types of traffic situation data (tsD).

13. The model determination unit (400) according to one of the claims 8 to 12, wherein the model determination unit (400) further comprises:

a safety unit (412) being configured to determine a safety indicator (g) in dependence on the traffic situation data (tsD); and
the training unit (400) being configured to train the communication model (110; 120), if the safety indicator (g) indicates the traffic situation as safe at least for the road user.

14. The model determination unit (400) according to claim 13, wherein the safety unit (412) is configured to determine the safety indicator (g) in dependence on the traffic situation data (tsD) using a further machine-learning model (420).

15. The model determination unit (400) according to one of the claims 8 to 14, wherein the machine-learning communication model (110; 120) and/or the further machine-learning model (420) is a Gaussian process model, a Bayesian Neural Network, or a Bayesian non-linear regression model.

16. A method for determining a machine-learning communication model (110; 120) for cooperative driving of a road user, wherein the method comprises:

determine a coordination score (s) in dependence on a traffic situation outcome (tsO); and
train the communication model (110; 120) with a plurality of training sets (ts) in dependence on the coordination score (s), wherein each training set (ts) comprises traffic situation data (tsD), at least one communication parameter (cP) and the traffic situation outcome (tsO).

17. The method according to claim 16, wherein the method is adapted to operate the model determination unit (400) according to one of the claims 9 to 15.

18. A system comprising the on-board unit (OBU1; OBU2) according to claims 1 to 5 and the model determination unit (400) according to claims 8 to 15.

19. A method comprising the method according to claim 6 or 7 and the method according to claim 16 or 17.

20. A vehicle (V1; V2) comprising the on-board unit (OBU1; OBU2) according to one of the claims 1 to 5 and/or the model determination unit (400) according to one of the claims 9 to 15.

21. The vehicle (V1; V2) according to claim 20, wherein the vehicle (V1; V2) comprises at least one sensor (202; 212) being configured to provide a part of the traffic situation data (tsD), and wherein the vehicle (V1; V2) comprises at least one actuator (204; 2014) being configured to be controlled in dependence on at least one trajectory which has been agreed upon via the at least one coordination message (cM) between the on-board-unit (OBU1; OBU2) and the at least one other on-board-unit (OBU2; OBU1) of another vehicle (V2; V1).

22. A user equipment (UE) comprising the on-board unit (OBU1; OBU2) according to one of the claims 1 to 5 and/or the determination unit (400) according to one of the claims 8 to 15.

**FIG. 1**

FIG. 2

EP 3 896 942 A1

**FIG. 3**

FIG. 4

EP 3 896 942 A1

504

430

400

st(t)

a(t+1)

st(t+1)

502

r(t)    r(t+1)

# FIG. 5

st (t)

V2

a (t+1)

V1

st (t+1)

V2

a (t+2)

V1

st (t+2)

V2

FIG. 6

FIG. 7

FIG. 8

EP 3 896 942 A1

Europäisches
Patentamt

European
Patent Office

Office européen
des brevets

# EUROPEAN SEARCH REPORT

Application Number

EP 20 16 9777

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y<br><br>A | US 2019/107840 A1 (GREEN COLIN JEFFREY [US] ET AL) 11 April 2019 (2019-04-11)<br>* abstract *<br>* paragraph [0025] - paragraph [0038] *<br>* paragraph [0069] - paragraph [0072] *<br>* paragraph [0147] - paragraph [0148] *<br>* paragraph [0159] *<br>* paragraph [0178] - paragraph [0191] *<br>----- | 8-17,20, 22<br><br>5,18,19, 21<br><br>1-4,6,7 | INV.<br>H04L29/08<br>G05D1/02 |
| X<br><br>Y<br><br>A | WO 2017/076593 A1 (VOLKSWAGEN AG [DE]; AUDI AG [DE]) 11 May 2017 (2017-05-11)<br>* abstract; figures 1-5 *<br>* paragraph [0010] - paragraph [0020] *<br>* paragraph [0033] - paragraph [0047] *<br>----- | 1-4,6,7, 20,22<br><br>5,18,19, 21<br><br>8-17 | |
| A | US 2019/152490 A1 (LAN TIAN [US] ET AL) 23 May 2019 (2019-05-23)<br>* abstract *<br>* paragraph [0006] - paragraph [0007] *<br>----- | 1-22 | |
| | | | TECHNICAL FIELDS SEARCHED (IPC)<br><br>H04L<br>G05D |

The present search report has been drawn up for all claims

| Place of search | Date of completion of the search | Examiner |
|---|---|---|
| The Hague | 27 July 2020 | Stevanovic, Natasa |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 .......................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 16 9777

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2020

| Patent document cited in search report | | Publication date | Patent family member(s) | | Publication date |
|---|---|---|---|---|---|
| US 2019107840 | A1 | 11-04-2019 | US<br>US | 10019011  B1<br>2019107840 A1 | 10-07-2018<br>11-04-2019 |
| WO 2017076593 | A1 | 11-05-2017 | CN<br>DE<br>EP<br>US<br>WO | 108351648  A<br>102015221817 A1<br>3371669 A1<br>2018321689 A1<br>2017076593 A1 | 31-07-2018<br>11-05-2017<br>12-09-2018<br>08-11-2018<br>11-05-2017 |
| US 2019152490 | A1 | 23-05-2019 | US<br>US<br>WO | 2019152490 A1<br>2020180648 A1<br>2019104112 A1 | 23-05-2019<br>11-06-2020<br>31-05-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102018109885 A1

- DE 102018109883 A1

**Non-patent literature cited in the description**

- **C. E. RASMUSSEN ; C. K. I. WILLIAMS.** Gaussian Processes for Machine Learning. MIT Press, 2006

- **YARIN GAL.** Uncertainty in Deep Learning, PhD thesis. University of Cambridge, 2016
- *ETSI EN 302 663 V1.2.0,* November 2012
- *ETSI TS 102 687 V1.1.1,* July 2011